# EUROPEAN PATENT SPECIFICATION

(11) **EP 4 199 240 B1**
(45) Date of publication and mention of the grant of the patent: **01.04.2026**
(21) Application number: 22752958.3
(22) Date of filing: 08.02.2022
(51) Int. Cl.: H01M 50/569, H01M 50/502, H01M 50/249, H01M 10/48, H01M 50/507, H01M 10/42, H01M 50/209, H01M 50/211, H01M 50/296, H01M 50/50

(54) **BATTERY MODULE INCLUDING BUS BAR FRAME FOR EFFICIENT LAYOUT OF CONNECTOR, AND BATTERY PACK INCLUDING THE BATTERY MODULE**
BATTERIEMODUL MIT SAMMELSCHIENENRAHMEN ZUR EFFIZIENTEN ANORDNUNG EINES VERBINDERS UND BATTERIEPACK DAMIT
MODULE DE BATTERIE COMPRENANT UN CADRE DE BARRE OMNIBUS POUR AGENCEMENT EFFICACE DE CONNECTEUR, ET BLOC-BATTERIE LE COMPRENANT

(30) Priority: 09.02.2021 KR 20210018519
(43) Date of publication of application: 21.06.2023
(73) Proprietor: LG Energy Solution, Ltd., Seoul 07335 (KR)
(72) Inventor: AN, Hyuk, Daejeon 34122 (KR)
(74) Representative: Hoffmann Eitle
(86) International application number: PCT/KR2022/001939
(87) International publication number: WO 2022/173198

(56) References cited:
- CN-A- 111 279 515
- CN-A- 111 801 810
- CN-A- 112 103 422
- JP-B2- 6 168 986
- KR-A- 20200 069 720
- KR-A- 20200 084 450
- KR-B1- 101 944 111
- KR-B1- 102 032 999
- US-A1- 2020 185 683
- US-B2- 10 418 765

## Description

### TECHNICAL FIELD

The present disclosure relates to a battery module, and more particularly, to a connector arrangement structure for a space-efficient layout of a connector for voltage sensing of battery cells in a battery module.

The present application claims priority to Korean Patent Application No. 10-2021-0018519 filed on February 9, 2021 in the Republic of Korea.

### BACKGROUND ART

Semi-permanent batteries capable of converting electrical energy into chemical energy and repeated charging and discharging are referred to as secondary batteries to be distinguishable from primary batteries that may not be re-used after being used once.

Examples of secondary batteries include lithium secondary batteries, nickel cadmium (Ni-Cd) batteries, lead-acid batteries, nickel-metal hydride (Ni-MH) batteries, zinc-air batteries, and alkaline manganese batteries. Among them, lead-acid batteries and lithium secondary batteries may be most actively commercialized secondary batteries.

In particular, lithium secondary batteries have recently been actively used as batteries for electric vehicles because of advantages of high energy density, light weight, small size, excellent safety, low discharge rate, and long lifespan. For reference, lithium secondary batteries are generally classified into cylindrical, prismatic, and pouch-type batteries according to manufacturing shapes, and may be used as batteries for energy storage systems (ESS) and other electric devices in addition to batteries for electric vehicles.

Currently, a sufficient output to drive an electric vehicle may not be obtained from only one lithium secondary battery (cell). In order to apply a secondary battery as an energy source for an electric vehicle, a battery module is configured by connecting a plurality of lithium-ion battery cells in series and/or in parallel.

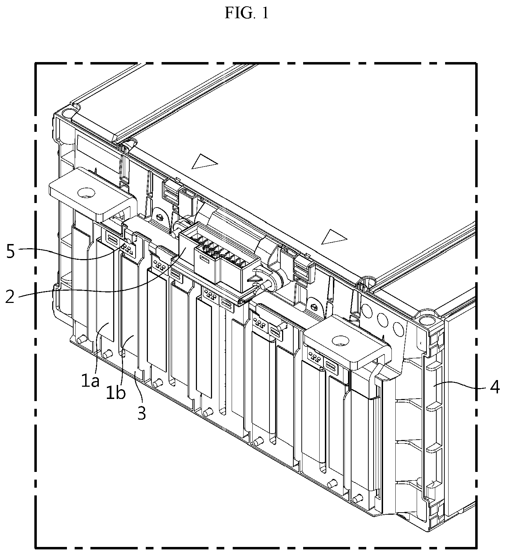

For example, as shown in FIG. 1, when a battery module includes a pouch-type secondary battery cell, electrode leads 1a, 1b of the pouch-type secondary battery cell are welded to a bus bar 3. The bus bar 3 is located on a front surface of the battery module, or on a front surface and a rear surface of the battery module, and a plurality of electrode leads 1a, 1b are welded to one bus bar 3, and thus, secondary battery cells are connected in series and in parallel.

Voltage information of the secondary battery cells in the battery module is transmitted to a BMS (not shown) through a sensing unit 5 connected to each bus bar 3 and a connector 2 connected to the sensing unit 5, and the BMS controls charging/discharging of the secondary battery cells by monitoring a state of each battery cell based on the voltage information. In a conventional battery module, in general, the sensing unit 5 is a flat flexible cable (FFC) or a flexible printed circuit board (FPCB), and the connector 2 is
located on an upper portion of a bus bar frame 4 located over the electrode leads 1a, 1b of the secondary battery cell.

Although a method of increasing widths of electrode leads has recently been considered with the increasing consumer demand for rapid charging, when widths of the electrode leads 1a, 1b and the bus bar 3 increase (in a width direction of the battery module), the upper portion of the bus bar frame 4 hardly remains, and thus, the connector 2 may not be arranged as shown in FIG. 1. However, when a position of the connector 2 is completely different from an existing position, other components related to the connector 2 should be re-arranged or a structure should be changed altogether.

KR 2020 0084450 A relates to a battery module having an efficient assembly structure.

CN 111 801 810 A relates to a battery module including an inner cover, and more particularly, to a battery module that minimizes damage to the internal structure generated in an assembly process.

US 2020/185683 A1 relates to an interconnect assembly for a traction battery array. The interconnect assembly includes a multi-port connector.

### DISCLOSURE

### Technical Problem

The present disclosure is designed to solve the problems of the related art, and therefore the present disclosure is directed to providing a battery module in which a connector and an electrode lead having a large width may be space-efficiently provided on a bus bar frame without being interfered with each other by re-designing the bus bar frame.

These and other objects and advantages of the present disclosure may be understood from the following detailed description and will become more fully apparent from the exemplary embodiments of the present disclosure. Also, it will be easily understood that the objects and advantages of the present disclosure may be realized by the means shown in the appended claims and combinations thereof.

### Technical Solution

In view of the above, a battery module as defined by claim 1 is proposed.

In an aspect of the present disclosure, there is provided a battery module including: a cell stack in which a plurality of battery cells are stacked; bus bars connected in a pre-determined pattern to electrode leads of the plurality of battery cells; a sensing unit connected to each of the bus bars to sense voltages of the plurality of battery cells; a connector mounted on a side of the sensing unit; and a bus bar frame including a frame main body that covers a side portion of the cell stack and allows the bus bars to be attached to a front surface of the frame main body, and a connector mount portion on which the connector is mounted, wherein the connector mount portion is rotatably provided on an upper end of the frame main body so that the connector is located in front of the bus bars.

The connector may be fixedly mounted on the connector mount portion, and may be located at a position lower than an uppermost end of the cell stack in front of the frame main body.

The connector mount portion includes:
a first support plate horizontally extending from an uppermost end of the frame main body; and a second support plate hinged to an end of the first support plate.

The frame main body may include a horizontal plate located under the first support plate and protruding from the front surface of the frame main body to be parallel to the first support plate, wherein the bus bars are arranged in an arrangement direction of the plurality of battery cells under the horizontal plate.

The horizontal plate may include a slit through which sensing terminals branching from the sensing unit vertically pass.

The horizontal plate may protrude by a length enough to support a surface of the second support plate so that the second support plate does not contact the bus bars.

The horizontal plate may include an insertion portion having a ball shape at an end thereof, and the second support plate may include a groove portion into which the insertion portion is press-fitted when the second support plate rotates by 90° with respect to the first support plate.

The plurality of battery cells may be pouch-type battery cells, wherein a width of each of the electrode leads of the plurality of battery cells is 70% to 90% of a height of the cell stack.

In another aspect of the present disclosure, there is also provided a battery pack including the at least one battery module.

In another aspect of the present disclosure, there is also provided a vehicle including the battery pack.

### Advantageous Effects

According to an aspect of the present disclosure, a battery module in which a connector may be provided on a side portion of a cell stack without being interfered with electrode leads may be provided.

An electrode lead having a larger width than that of a conventional electrode lead and a connector may be provided on a bus bar frame without being interfered with each other, and the connector may be located not to protrude above an upper end of a cell stack. For example, when the connector protrudes above the upper end of the cell stack, the connector may be interfered with an inlet or an inner wall of a module case when the connector is accommodated in the module case. However, according to the configuration of the connector and the bus bar frame of the present disclosure, interference between the connector and the module case may be removed.

The effects of the present disclosure are not limited to the effects mentioned above, and other effects not mentioned will be clearly understood by one of ordinary skill in the art from the specification and the attached drawings.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a view illustrating a portion of a battery module for describing an arrangement structure of a connector for voltage sensing according to the related art.
FIG. 2 is a perspective view illustrating a configuration of a battery module according to an embodiment of the present disclosure.
FIG. 3 is an exploded perspective view of FIG. 2.
FIG. 4 is a partial enlarged view illustrating a bus bar frame of FIG. 3.
FIG. 5 is a partial enlarged view illustrating a connector arrangement structure of a battery module according to an embodiment of the present disclosure.
FIGS. 6 and 7 are views illustrating before and after bending of a connector mount portion of a bus bar frame according to an embodiment of the present disclosure.
FIG. 8 is a view illustrating a modification of the connector mount portion of FIG. 7.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the present disclosure, so it should be understood that other equivalents and modifications could be made thereto without departing from the scope of the present disclosure.

These embodiments are provided so that this disclosure will be thorough and complete, and will fully convey the scope of the disclosure to one of ordinary skill in the art. Accordingly, the thickness and size of each element shown in the drawings may be exaggerated, omitted or schematically drawn for the purpose of clarity. Accordingly, the size of each element does not utterly reflect an actual size or ratio.

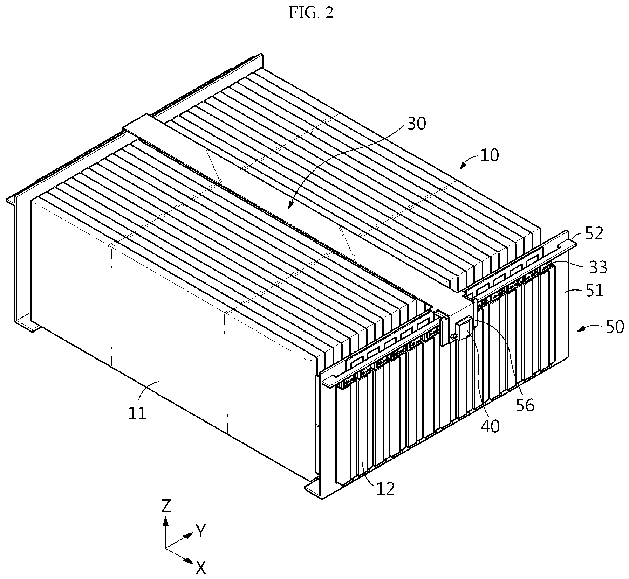

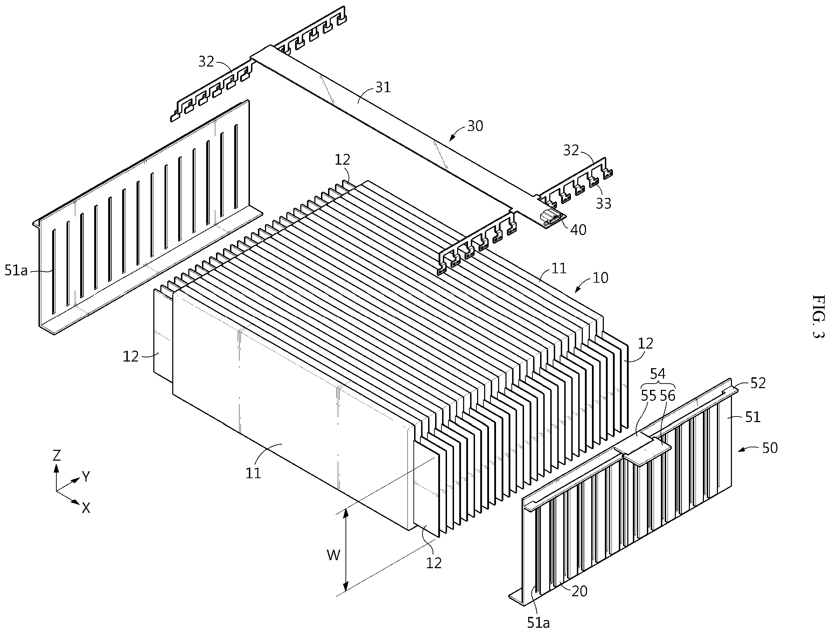

FIG. 2 is a perspective view illustrating a configuration of a battery module according to an embodiment of the present disclosure. FIG. 3 is an exploded perspective view of FIG. 2.

As shown in FIGS. 2 and 3, a battery module according to an embodiment of the present disclosure includes a cell stack 10, a bus bar 20, a sensing unit 30, a connector 40, and a bus bar frame 50.

The cell stack 10 may be a collection of battery cells 11. For example, the battery cells 11 may be stacked in a left-right direction (±Y axis direction) while being vertically upright, to form the cell stack 10. The battery cells 11 are pouch-type battery cells 11 in which a positive electrode lead and a negative electrode lead are located opposite to each other.

The pouch-type battery cell 11 includes an electrode assembly, an electrolytic solution, and a pouch casing for packaging the electrode assembly and the electrolytic solution. The electrode assembly has a stack structure of a positive electrode plate, a separator, and a negative electrode plate, the positive electrode plate and the negative electrode plate are provided with electrode tabs, and one or more electrode tabs are connected to an electrode lead 12. The electrode lead 12 may extend from the inside to the outside of the pouch casing and may function as an electrode terminal of the battery cell 11. The electrode lead 12 is a generic term for a positive electrode lead and a negative electrode lead.

The pouch casing may include a metal thin film, for example, an aluminum thin film, to protect internal elements such as the electrode assembly and the electrolytic solution, and supplement electrochemical properties and improve heat dissipation of the electrode assembly and the electrolytic solution. The aluminum thin film may be located between an inner adhesive layer and an insulating layer formed of an insulating material to ensure electrical insulation.

In the pouch-type battery cell 11 according to the present embodiment, a width W of the electrode 12 is greater than that in a general battery cell as shown in FIG. 3. For example, in the pouch battery cell 11 of the present embodiment, the width W of the electrode lead 12 may be 70% to 80% of a height of the cell stack 10. As such, when the width of the electrode lead 12 increases, heat generation during rapid charging of the battery cell is effectively reduced.

When the electrode leads 12 are connected in a pre-determined pattern to the corresponding bus bar 20, the battery cells 11 are connected to one another in series, or in series and in parallel. The bus bar 20 refers to a bar-shaped conductor capable of electrically connecting the battery cells 11.

A plurality of bus bars 20 may be provided, and may be attached to the bus bar frame 50 in a direction corresponding to a stack direction of the battery cells 11. The electrode lead 12 of each battery cell 11 may pass through an opening 51a of the bus bar frame 50 and is drawn out to the front of the bus bar frame, and the drawn portion of the electrode lead 12 may be bent and then laser-welded to a surface of the bus bar 20.

For example, when one battery cell 11 is an N^{th} cell and the following cells are an N+1^{th} cell, an N+2^{th} cell, ..., in the stack direction of the battery cells 11, the N^{th} cell, the N+1^{th} cell, the N+2^{th} cell, ... may be arranged with alternating polarities. A positive electrode lead of the N^{th} cell and a negative electrode lead of the N+1^{th} cell located on a front surface of the cell stack 10 are placed on and welded to one bus bar 20, and a positive electrode lead of the N+1^{th} cell and a negative electrode lead of the N+2^{th} cell located on a rear surface of the cell stack 10 are placed on and welded to another bus bar 20. When the electrode leads 12 of all of the battery cells 11 are welded to the bus bars 20 in this pattern, the battery cells 11 may be connected in series.

In another example, when the electrode leads 12 of the battery cells are connected to the bus bar 20 in a pattern where two or three consecutive battery cells 11 are arranged in a group with polarities in the same direction, and positive electrode leads of one group and negative electrode leads of another group are integrally welded to one bus bar 20, the battery cells 11 may be connected in series and in parallel.

The sensing unit 30 is an element for sensing node voltages of the battery cells 11 connected in series and transmitting voltage information of each battery cell 11 to a battery management system (BMS). The BMS monitors states of the battery cells 11 through the sensing unit 30 and controls charging/discharging of the battery cells 11.

The sensing unit 30 may be implemented as a film cable such as a flexible printed circuit board (FPCB) or a flat flexible cable (FFC). The FPCB may be manufactured by locating a copper clad laminate on a base film, laminating a dry film, performing exposure, development, and etching processes to form conductive lines at regular intervals, and then adhering a coverlay film. The FFC may be manufactured by arranging conductive lines on a base film at regular intervals and laminating a coverlay on the conductive lines.

The sensing unit 30 that is a film cable may process a large amount of signals with a minimum volume because the conductive performance of the conductive lines is excellent and insulation between the conductive lines is completely ensured with one insulating film.

Referring back to FIG. 3, the sensing unit 30 according to the present embodiment includes a first part 31 located on the cell stack 10 and extending in a longitudinal direction (±X axis) of the cell stack 10, second parts 32 extending from both end portions of the first part 31 in a width direction (±Y axis) of the cell stack 10, and sensing terminals 33 branching from the second part 32 to contact the bus bar 20.

The connector 40 may be mounted on an end portion of the sensing unit 30 as shown in FIG. 3, and a signal may be transmitted to the BMS (not shown) when another cable connector 60 is connected to the connector 40.

The cell stack 10 may be accommodated in a module case (not shown) having a rectangular pipe shape. In general, the module case (not shown) has an inner space corresponding to the volume of the cell stack 10. Accordingly, when the connector 40 is located at a position higher than an upper end of the cell stack 10, the connector 40 is caught by an inlet or an inner wall of the module case when the cell stack 10 is inserted into the module case, thereby failing to insert the cell stack 10.

However, according to the configuration of the bus bar frame 50 and the connector 40 according to the present embodiment, because the connector 40 may be stably located at a position lower than the upper end of the cell stack 10 as shown in FIG. 2, the above-described problem (the connector is interfered with the inlet of the module case when the cell stack 10 is inserted into the module case (not shown)) is not caused.

A configuration of the bus bar frame 50 will be described with reference to FIGS. 3, and 4 through 8.

The bus bar frame 50 includes a frame main body 51 and a connector mount portion 54.

As shown in FIG. 3, the frame main body 51 is an injection structure having a plate shape and a size enough to cover a side portion of the cell stack 10 on which the electrode leads 12 of the battery cells 11 are located. The bus bars 20 may be attached to a front surface of the frame main body 51, and the openings 51a from which the electrode leads 12 may be taken out may be provided in the frame main body 51 on both sides of each bus bar 20.

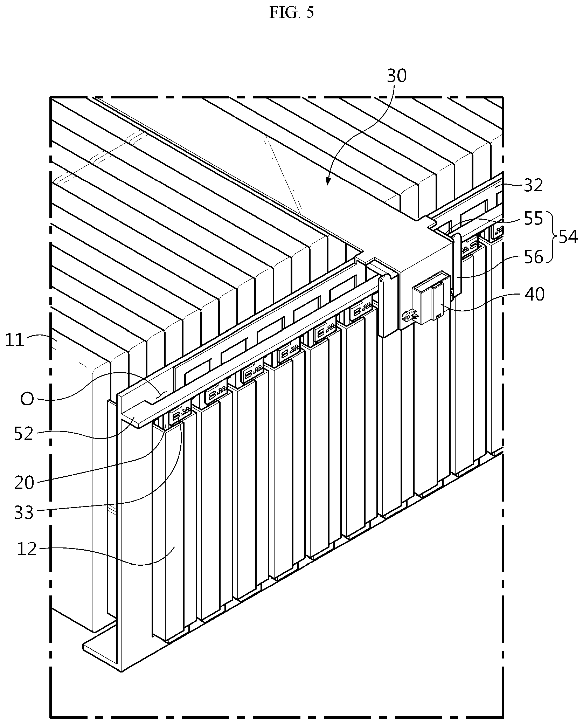

The frame main body 51 may cover the entire side portion of the cell stack 10. Accordingly, a height of the frame main body 51 may be almost equal to a height of the cell stack 10, and the connector mount portion 54 may be provided on an upper end of the frame main body 51. As shown in FIG. 5, because the connector mount portion 54 is an element for supporting the connector 40, the connector mount portion 54 only needs to have a size enough to mount the connector 40 thereon. Although the connector mount portion 54 is provided at the center of the upper end of the frame main body 51 in the present embodiment, a design may be changed so that the connector mount portion 54 is provided at a position other than the center of the upper end when necessary.

A space below the connector mount portion 54 may be fully used as a space where the bus bar 20 and the electrode lead 12 are located. That is, most of the area of the frame main body 51 may be used as a space for sufficiently increasing a width of the electrode lead 12 and locating the bus bars 20 having a suitable size.

The connector mount portion 54 for fixedly installing the connector 40 may be rotatable from the upper end of the frame main body 51 downward with the connector 40 mounted thereon.

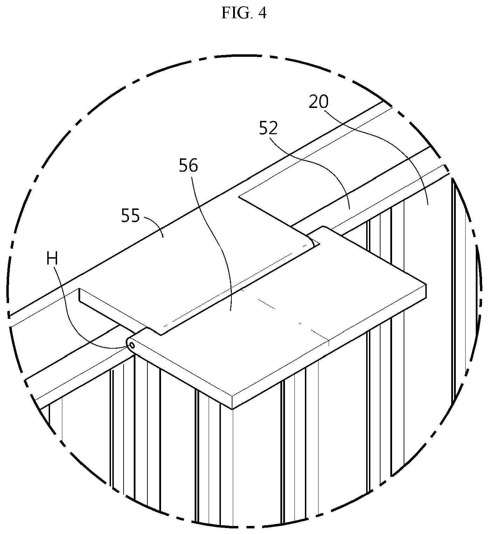

For example, the connector mount portion 54 may include a first support plate 55 horizontally extending from an uppermost end of the frame main body 51 and a second support plate 56 hinged to an end of the first support plate 55, as shown in FIG. 4.

When the connector 40 is mounted on the second support plate 56 and the second support plate 56 rotates by 90° with respect to the end of the first support plate 55, as shown in FIG. 5, the connector 40 may be located at a position lower than an uppermost end of the cell stack 10 in front of the frame main body 51. In this case, not only the bus bar 20 and the electrode lead 12 having a large width but also the connector 40 may be space-efficiently located on the side portion of the cell stack 10, and as described above, collision between the connector 40 and an inner wall of a module case may be prevented when the cell stack 10 is inserted into the module case.

The bus bar frame 50 according to the present embodiment further includes a horizontal plate 52 on the frame main body 51. The horizontal plate 52 may be located under the first support plate 55 and may protrude from the front surface of the frame main body 51 to be parallel to the first support plate 55. The bus bars 20 may be arranged in an arrangement direction of the battery cells 11 under the horizontal plate 52.

The horizontal plate 52 may protrude by a length enough to support a surface of the second support plate 56 so that the second support plate 56 does not contact the bus bars 20 during rotation of the second support plate 56. Preferably, the horizontal plate 52 may contact the second support plate 56 when the second support plate 56 forms 90° with respect to the first support plate 55.

Also, the horizontal plate 52 includes a slit O through which the sensing terminals 33 branching from the sensing unit 30 vertically pass. The slit O has a size enough to barely insert the sensing terminal 33. In this case, the sensing terminals 33 may be located from the top to the bottom of the horizontal plate 52 through the slit O, and may be closely attached to a plate surface of the frame main body 51 without lifting. The sensing terminals 33 may be fixed to upper end portions of the corresponding bus bars 20 by using, for example, laser welding or bonding.

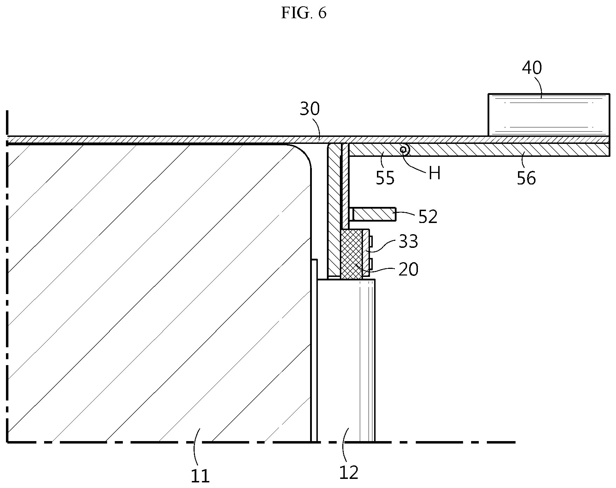

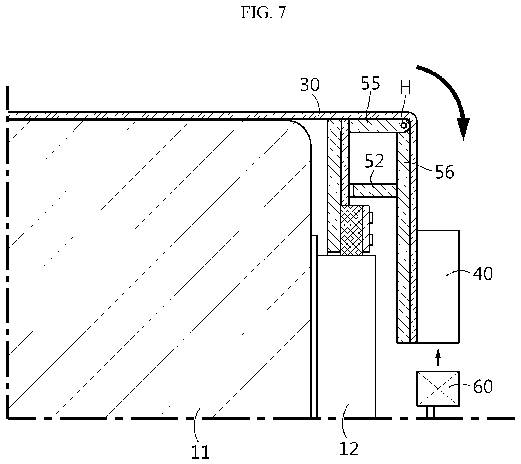

Next, an example of using the connector mount portion 54 according to the present embodiment will be described with reference to FIGS. 6 and 7.

When the electrode lead 12 and the sensing terminal 33 are welded to the bus bar 20, if the connector 40 is in front of the bus bar 210, an assembly process is disturbed. Accordingly, first, as shown in FIG. 6, the electrode lead 12 are connected to the sensing terminal 33 in a state where the second support plate 56 is horizontally fixed with respect to the first support plate 55. In this case, the second support plate 56 may be horizontally fixed with respect to the first support plate 55, by using an angle-adjustable hinge.

Next, after the electrode lead 12 and the sensing terminal 33 are connected to the bus bar 20, as shown in FIG. 7, the second support plate 56 rotates so that the connector 40 is located at a position lower than an uppermost end of the cell stack 10. Because the second support plate 56 contacts an end of the horizontal plate 52 when the second support plate 56 rotates by 90° in the present embodiment, the second support plate 56 may be prevented from colliding with the electrode lead 12 of the battery cell 11.

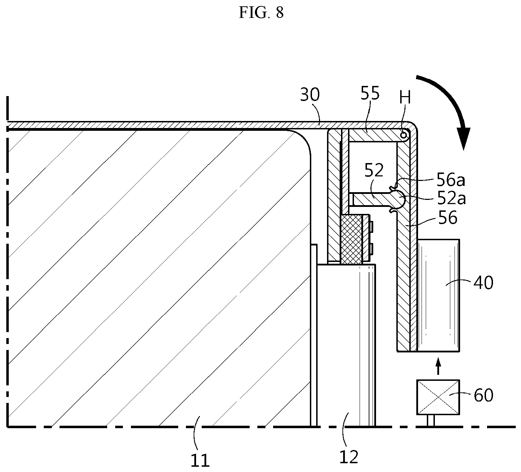

In a modification of the configuration, as shown in FIG. 8, the horizontal plate 52 may include an insertion portion 52a having a ball shape at an end thereof, and the second support plate 56 may include a groove portion 56a into which the insertion portion 52a is press-fitted when the second support plate 56 rotates by 90° with respect to the first support plate 55.

According to the modification, because the second support plate 56 is fixed to the horizontal plate 52, movement of the second support plate 56 may be suppressed even with impact or vibration. Accordingly, according to the modification, even when the battery module is used under a condition where impact or vibration is continuously applied, the fixing of the connector 40 may be more stable than that in the above embodiment.

As described above, according to the configuration of the battery module of the present disclosure, not only the electrode lead 12 having a large width and the bus bars 20 but also the connector 40 for voltage sensing may be space-efficiently located in a front area of the bus bar frame 50 without being interfered with each other.

A battery pack according to the present disclosure may include one or more battery modules according to the present disclosure. Also, the battery pack according to the present disclosure may further include, in addition to the battery modules, a pack case for accommodating the battery modules, and various devices for controlling charging and discharging of each battery module, for example, a master BMS, a current sensor, and a fuse.

The battery module according to the present disclosure may be applied to a vehicle such as an electric vehicle or a hybrid vehicle. That is, the vehicle may include the battery module according to the present disclosure.

While one or more embodiments of the present disclosure have been described with reference to the embodiments and figures, the present disclosure is not limited thereto, and it will be understood by one of ordinary skill in the art that various changes in form and details may be made therein without departing from the scope of the present disclosure as defined by the following claims.

It will be understood by one of ordinary skill in the art that when terms indicating directions such as upper, lower, left, right, front, and rear are used, these terms are only for convenience of explanation and may vary according to a position of an target object, a position of an observer, etc.

## Claims

1. A battery module comprising:
a cell stack (10) in which a plurality of battery cells (11) are stacked;
bus bars (20) connected in a pre-determined pattern to electrode leads of the plurality of battery cells;
a sensing unit (30) connected to each of the bus bars to sense voltages of the plurality of battery cells;
a connector (40) mounted on a side of the sensing unit; and
a bus bar frame (50) comprising a frame main body (51) that covers a side portion of the cell stack and allows the bus bars to be attached to a front surface of the frame main body, and a connector mount portion (54) on which the connector is mounted,
wherein the connector mount portion (54) is rotatably provided on an upper end of the frame main body so that the connector is located in front of the bus bars,
**characterized in that** the connector mount portion (54) comprises:
a first support plate (55) horizontally extending from an uppermost end of the frame main body; and
a second support plate (56) hinged to an end of the first support plate (55).

2. The battery module according to claim 1, wherein the connector (40) is fixedly mounted on the connector mount portion (54), and is located at a position lower than an uppermost end of the cell stack in front of the frame main body.

3. The battery module according to claim 1, wherein the frame main body comprises a horizontal plate (52) located under the first support plate (54) and protruding from the front surface of the frame main body to be parallel to the first support plate,
wherein the bus bars (20) are arranged in an arrangement direction of the plurality of battery cells under the horizontal plate.

4. The battery module according to claim 3, wherein the horizontal plate (52) comprises a slit through which sensing terminals (33) branching from the sensing unit (30) vertically pass.

5. The battery module according to claim 3, wherein the horizontal plate (52) protrudes by a length enough to support a surface of the second support plate (56) so that the second support plate (56) does not contact the bus bars.

6. The battery module according to claim 3, wherein the horizontal plate (52) comprises an insertion portion (52a) having a ball shape at an end thereof, and the second support plate (56) comprises a groove portion (56a) into which the insertion portion is press-fitted when the second support plate rotates by 90° with respect to the first support plate.

7. The battery module according to claim 1, wherein the plurality of battery cells (11) are pouch-type battery cells,
wherein a width of each of the electrode leads of the plurality of battery cells is 70% to 90% of a height of the cell stack.

8. A battery pack comprising at least one battery module according to any one of claims 1 through 7.

9. A vehicle comprising the battery pack according to claim 8.

## Patentansprüche

1. Batteriemodul, umfassend:
einen Zellenstapel (10), in dem eine Vielzahl von Batteriezellen (11) gestapelt ist;
Sammelschienen (20), die in einem vorbestimmten Muster mit Elektrodenleitungen der Vielzahl von Batteriezellen geschaltet sind;
eine Sensoreinheit (30), die mit jeder der Sammelschienen geschaltet ist, um Spannungen der Vielzahl von Batteriezellen zu erfassen;
einen Verbinder (40), der an einer Seite der Sensoreinheit montiert ist; und
einen Sammelschienenrahmen (50), umfassend einen Rahmenhauptkörper (51), der einen Seitenabschnitt des Zellenstapels abdeckt und es ermöglicht, dass die Sammelschienen an einer Vorderfläche des Rahmenhauptkörpers angebracht werden, und einen Verbinder-Montageabschnitt (54), auf dem der Verbinder montiert ist,
wobei der Verbinder-Montageabschnitt (54) drehbar an einem oberen Ende des Rahmenhauptkörpers bereitgestellt ist, so dass der Verbinder vor den Sammelschienen angeordnet ist,
**dadurch gekennzeichnet, dass**
der Verbinder-Montageabschnitt (54) Folgendes umfasst:
eine erste Stützplatte (55), die sich von einem obersten Ende des Rahmenhauptkörpers horizontal erstreckt; und
eine zweite Stützplatte (56), die an einem Ende der ersten Stützplatte (55) angelenkt ist.

2. Batteriemodul nach Anspruch 1, wobei der Verbinder (40) fest auf dem Verbinder-Montageabschnitt (54) montiert ist und an einer Position unterhalb eines obersten Endes des Zellenstapels vor dem Rahmenhauptkörper angeordnet ist.

3. Batteriemodul nach Anspruch 1, wobei der Rahmenhauptkörper eine horizontale Platte (52) umfasst, die unter der ersten Stützplatte (54) angeordnet ist und von der Vorderfläche des Rahmenhauptkörpers vorspringt, so dass sie parallel zur ersten Stützplatte ist,
wobei die Sammelschienen (20) in einer Anordnungsrichtung der Vielzahl von Batteriezellen unter der horizontalen Platte angeordnet sind.

4. Batteriemodul nach Anspruch 3, wobei die horizontale Platte (52) einen Schlitz umfasst, durch den Sensinganschlüsse (33), die von der Sensoreinheit (30) abzweigen, vertikal hindurchgeführt werden.

5. Batteriemodul nach Anspruch 3, wobei die horizontale Platte (52) um eine Länge vorspringt, die ausreicht, um eine Fläche der zweiten Stützplatte (56) abzustützen, so dass die zweite Stützplatte (56) die Sammelschienen nicht berührt.

6. Batteriemodul nach Anspruch 3, wobei die horizontale Platte (52) einen Einführabschnitt (52a) umfasst, der an einem Ende derselben eine Kugelform aufweist, und die zweite Stützplatte (56) einen Nutenabschnitt (56a) umfasst, in den der Einführabschnitt eingepresst wird, wenn sich die zweite Stützplatte um 90° gegenüber der ersten Stützplatte dreht.

7. Batteriemodul nach Anspruch 1, wobei die Vielzahl von Batteriezellen (11) beutelartige Batteriezellen sind,
wobei eine Breite jeder der Elektrodenleitungen der Vielzahl von Batteriezellen 70 % bis 90 % einer Höhe des Zellenstapels beträgt.

8. Batteriepack, umfassend mindestens ein Batteriemodul nach einem der Ansprüche 1 bis 7.

9. Fahrzeug, umfassend das Batteriepack nach Anspruch 8.

## Revendications

1. Module de batterie comprenant :
un empilement de cellules (10) dans lequel une pluralité de cellules de batterie (11) sont empilées ;
des barres omnibus (20) reliées, selon un motif prédéterminé, à des fils d'électrode de la pluralité de cellules de batterie ;
une unité de détection (30) reliée à chacune des barres omnibus pour détecter des tensions de la pluralité de cellules de batterie ;
un connecteur (40) monté sur un côté de l'unité de détection ; et
un cadre de barre omnibus (50) comprenant un corps principal de cadre (51) qui recouvre une partie latérale de l'empilement de cellules et permet aux barres omnibus d'être fixées sur une surface avant du corps principal de cadre, et une partie de montage de connecteur (54) sur laquelle le connecteur est monté,
dans lequel la partie de montage de connecteur (54) est prévue de manière rotative sur une extrémité supérieure du corps principal de cadre de sorte que le connecteur est situé devant les barres omnibus,
**caractérisé en ce que**
la partie de montage de connecteur (54) comprend :
une première plaque de support (55) qui s'étend horizontalement à partir d'une extrémité la plus haute du corps principal de cadre ; et,
une deuxième plaque de support (56) articulée au niveau d'une extrémité de la première plaque de support (55).

2. Module de batterie selon la revendication 1, dans lequel le connecteur (40) est monté de manière fixe sur la partie de montage de connecteur (54), et est situé à une position inférieure à une extrémité la plus haute de l'empilement de cellules devant le corps principal de cadre.

3. Module de batterie selon la revendication 1, dans lequel le corps principal de cadre comprend une plaque horizontale (52) située sous la première plaque de support (54) et faisant saillie depuis la surface avant du corps principal de cadre pour être parallèle à la première plaque de support,
dans lequel les barres omnibus (20) sont agencées dans une direction d'agencement de la pluralité de cellules de batterie sous la plaque horizontale.

4. Module de batterie selon la revendication 3, dans lequel la plaque horizontale (52) comprend une fente à travers laquelle passent verticalement des bornes de détection (33) se ramifiant à partir de l'unité de détection (30).

5. Module de batterie selon la revendication 3, dans lequel la plaque horizontale (52) fait saillie d'une longueur suffisante pour supporter une surface de la deuxième plaque de support (56) de sorte que la deuxième plaque de support (56) n'entre pas en contact avec les barres omnibus.

6. Module de batterie selon la revendication 3, dans lequel la plaque horizontale (52) comprend une partie d'insertion (52a) présentant une forme sphérique à une extrémité de celle-ci, et la deuxième plaque de support (56) comprend une partie de rainure (56a) dans laquelle la partie d'insertion est emmanchée en force lorsque la deuxième plaque de support tourne de 90 degrés par rapport à la première plaque de support.

7. Module de batterie selon la revendication 1, dans lequel la pluralité de cellules de batterie (11) sont des cellules de batterie de type poche,
dans lequel la largeur de chacun des fils d'électrode de la pluralité de cellules de batterie est de 70 % à 90 % de la hauteur de l'empilement de cellules.

8. Bloc-batterie comprenant au moins un module de batterie selon l'une quelconque des revendications 1 à 7.

9. Véhicule comprenant le bloc-batterie selon la revendication 8.
